# EUROPEAN PATENT APPLICATION

(11) **EP 2 627 083 A2**
(43) Date of publication of application: **14.08.2013**
(21) Application number: 13154274.8
(22) Date of filing: 06.02.2013
(51) Int. Cl.: H04N 7/14

(54) **Two mode agc for single and multiple speakers**

(30) Priority: 07.02.2012 US 201213368173
(71) Applicant: Google Inc., Mountain View, CA 94043 (US)
(72) Inventor: Enbom, Niklas, Mountain View, CA 94043 (US); Skoglund, Jan, San Francisco, CA 94114 (US); MacDonald, Andrew John, Mountain View , California 94043 (US); Volcker, Bjorn, 16733 Bromma (SE)
(74) Representative: Maiwald Patentanwalts GmbH

(57) **Abstract**

A control system for varying an audio level in a communication system, the control system comprising a receiving unit for receiving an audio signal and a video signal, a determining unit for determining a number of individuals speaking determined by performing recognition on either the audio signal or the video signal; and a gain adjustment unit for adjusting a gain of the audio signal based on said number of determined individuals that are speaking.

## Description

### RELATED APPLICATIONS

This application claims the benefit of U.S. Application No. 13/368,173 filed on February 7, 2012, the entire contents of which are hereby incorporated by reference.

### FIELD OF THE INVENTION

The present disclosure generally relates to an automatic gain control (AGC) mechanism for a (dual-mode) conferencing system utilizing a single speaker mode and a multi-speaker mode.

### BACKGROUND

An automatic gain control (AGC) mechanism is intended to set the microphone gain (digital or analog) so that an individual speaking is recorded at a suitable level. However, when a microphone is used by an individual that is speaking (a single speaker) or by individuals that are speaking (multiple speakers), the AGC mechanism may not properly adjust the gains of each individual that is speaking if it does not properly judge the number of individuals that are speaking.

Further, there can be adverse effects from gain changes when an individual is speaking during a meeting (for example, with a headset), and other people (non-meeting participants) are present talking in the background. More specifically, the system (e.g., the microphone system) may determine that there are a plurality of individuals that are speaking and make gain changes based on having a plurality of individuals that are speaking when, in actuality, there is only one actual/intended individual that is speaking. Therefore, there is a need for an AGC mechanism that can properly judge whether there is one or more actual or intended individuals that are speaking and not just whether there is one or more detected individuals that are speaking.

### SUMMARY

This Summary introduces a selection of concepts in a simplified form in order to provide a basic understanding of some aspects of the present disclosure. This Summary is not an extensive overview of the disclosure, and is not intended to identify key or critical elements of the disclosure or to delineate the scope of the disclosure. This Summary merely presents some of the concepts of the disclosure as a prelude to the Detailed Description provided below.

Aspects of the present invention provide a control system for varying an audio level in a communication system where the control system comprises at least one receiving unit for receiving an audio signal and a video signal, a determining unit for determining a number of individuals that are speaking by performing recognition on either the audio signal or the video signal, and a gain adjustment unit for adjusting a gain of the audio signal based on said number of determined individuals that are speaking.

According to an embodiment of the present invention, the recognition is performed by performing either face recognition or speech analysis in order to determine the number of individuals that are speaking.

According to another embodiment of the present invention, the recognition is performed by performing speech analysis on the audio signal in order to determine the number of individuals that are speaking.

According to a further embodiment of the present invention, the recognition is performed by performing face recognition on the video signal.

According to an additional embodiment of the present invention, the control system further comprises a switching unit for switching between a single speaker mode and a multi-speaker mode based on said detection of the number of individuals speaking.

According to another embodiment of the present invention, the face recognition is performed to detect either a face or a plurality of faces.

According to a further embodiment of the present invention, the control system further comprises a switching unit for switching between a single speaker mode and a multi-speaker mode based on the number of detected faces.

According to an additional embodiment of the present invention, the switching unit switching from the single speaker mode to the multi-speaker mode in response to said detection of a plurality of faces and gain adjustment unit adjusting the gain of the audio signal at a first rate in the multi-speaker mode, the switching unit switching from the multi-speaker mode to the single speaker mode in response to said detection of only a single face and gain adjustment unit adjusting the gain of the audio signal at a second rate in the single speaker mode, and wherein the first rate is a different rate than the second rate.

According to another embodiment of the present invention, the first rate is a rate greater than the second rate.

According to a further embodiment of the present invention, the detection unit determines whether the volume of the detected speech is outside a given range of volume by comparing the volume of the detected speech to at least one threshold, the detection unit determines whether the volume of the detected speech is outside the given range of volume for a certain length of time based on the occurrence that the volume of the detected speech is outside the given range of volume, the detection unit determines the first rate based on the volume of the detected speech, and the detection unit determines the second rate based on the volume of the detected speech.

According to an additional embodiment of the present invention, the at least one receiving unit receives a stream of data having both the audio signal and the video signal.

According to another embodiment of the present invention, the at least one receiving unit includes a first receiving unit for receiving the audio signal; and the at least one receiving unit includes a second receiving unit for receiving the video signal.

According to a further embodiment of the present invention, the first receiving unit is a microphone, and the second receiving unit is a camera.

Further, aspects of the present invention provide a control method for varying an audio level in a communication system, where the control method comprises the steps of receiving an audio signal, receiving a video signal, performing recognition on either the video signal or the audio signal to determine a number of individuals that are speaking, and adjusting a gain of the audio signal based on said number of determined individuals that are speaking.

According to an embodiment of the present invention, the recognition is performed by performing either face recognition or speech analysis in order to determine the number of individuals that are speaking.

According to another embodiment of the present invention, the recognition is performed by performing speech analysis on the audio signal in order to determine the number of individuals that are speaking.

According to an additional embodiment of the present invention, the recognition is performed by performing face recognition on the video signal.

Additionally, aspects of the present invention provide a control method for varying an audio level in a communication system, where the control method comprises the steps of capturing a video signal, capturing an audio signal, detecting speech of at least one user in the audio signal, performing face recognition on the video signal to detect either a face or a plurality of faces, determining the number of individuals that are speaking based on the number of the detected face or faces, switching between a single speaker mode and a multi-speaker mode based on the number of detected individuals that are speaking, switching from the single speaker mode to the multi-speaker mode in response to said detection of a plurality of faces, switching from the multi-speaker mode to the single speaker mode in response to said detection of only a single face, adjusting the gain of the audio signal at a first rate in the multi-speaker mode, and adjusting the gain of the audio signal at a second rate in the single speaker mode, wherein the first rate is a greater rate than the second rate.

According to a further embodiment of the present invention, the control method further comprises the steps of determining whether the volume of the detected speech is outside a given range of volume by comparing the volume of the detected speech to at least one threshold, determining whether the volume of the detected speech is outside the given range of volume for a certain length of time based on the occurrence that the volume of the detected speech is outside the given range of volume, determining the first rate based on the volume of the detected speech, and determining the second rate based on the volume of the detected speech.

Further scope of applicability of the present invention will become apparent from the Detailed Description given below. However, it should be understood that the Detailed Description and specific examples, while indicating preferred embodiments of the invention, are given by way of illustration only, since various changes and modifications within the spirit and scope of the invention will become apparent to those skilled in the art from this Detailed Description.

### BRIEF DESCRIPTION OF DRAWINGS

These and other objects, features and characteristics of the present disclosure will become more apparent to those skilled in the art from a study of the following Detailed Description in conjunction with the appended claims and drawings, all of which form a part of this specification. In the drawings:
Figure 1 is a circuit diagram of one aspect of a conferencing system according to one or more embodiments described herein.
Figure 2 is a flow chart representing one aspect of a video analysis method according to one or more embodiments described herein.
Figure 3 is a flow chart representing one aspect of an audio analysis method according to one or more embodiments described herein.

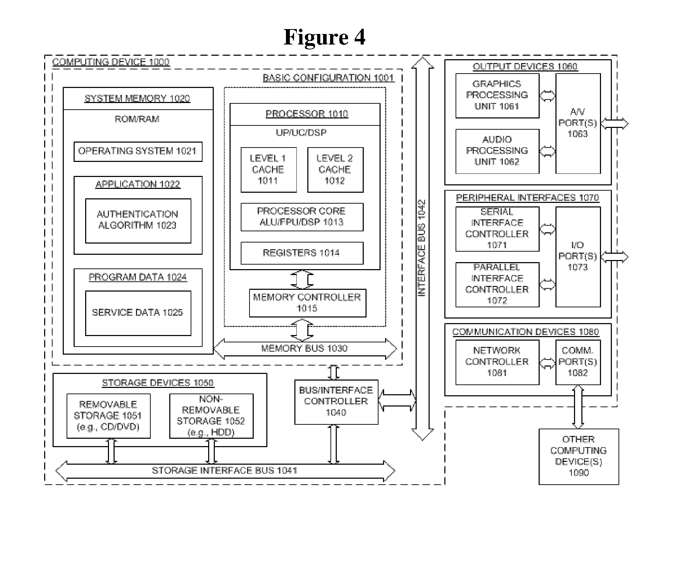

Figure 4 is a circuit diagram of one aspect of a controller (e.g., the gain controller 150) of the conferencing system according to one or more embodiments described herein.

The headings provided herein are for convenience only and do not necessarily affect the scope or meaning of the claimed invention.

In the drawings, the same reference numerals and any acronyms identify elements or acts with the same or similar structure or functionality for ease of understanding and convenience. The drawings will be described in detail in the course of the following Detailed Description.

### DETAILED DESCRIPTION

Various examples of the invention will now be described. The following description provides specific details for a thorough understanding and enabling description of these examples. One skilled in the relevant art will understand, however, that the invention may be practiced without many of these details. Likewise, one skilled in the relevant art will also understand that the invention can include many other obvious features not described in detail herein. Additionally, some well-known structures or functions may not be shown or described in detail below, so as to avoid unnecessarily obscuring the relevant description.

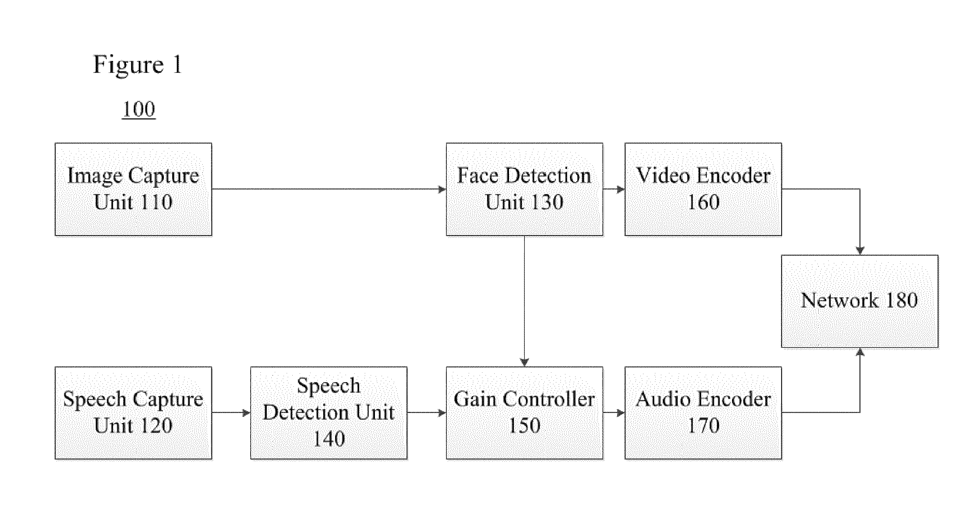

Figure 1 is a circuit diagram of one aspect of a conferencing system 100 according to one or more embodiments of the invention. In Figure 1, the conferencing system includes an image capture unit 110 (or an image capture circuit/circuitry 110), a speech capture unit 120 (or a speech capture circuit/circuitry 120), a face detection unit 130 (or a face detection circuit/circuitry 130), a speech detection unit 140 (or a speech detection circuit/circuitry 140), a gain controller 150 (which may, internally or externally, include a switching unit for switching between modes), a video encoder 160, an audio encoder 170, and a network 180.

The image capture unit 110 is an image capturing, image detecting, and/or image sensing device (e.g., a camera or any other similar such devices) for capturing, detecting, and/or sensing images. Further, the image capture unit 110 may contain an image sensor, for example, the image capture unit 110 may be any type of image sensor like a CCD (charge coupled device) image sensor, a CMOS (complementary metal oxide semiconductor) image sensor, or any other similar image sensors.

The image capture unit 110 may capture, detect, and/or sense an image via a camera or may receive capture, detect, sense, and/or extract image data from an inputted or received signal. The captured, detected, sensed, and/or extracted image is provided to the face detection unit 130. Said image may be provided to the face detection unit 130 via wired or wireless transmission.

The speech capture unit or device 120 is an audio or speech capturing and/or audio or speech sensing device (e.g., a microphone or any other similar such devices) for capturing and/or sensing audio or speech.

The speech capture unit 120 may capture and/or sense audio or speech (data or signal) via a microphone or may receive capture sense, and/or extract audio data/signal or speech data/signal from an inputted or received signal. The captured, sensed, and/or extracted audio or speech (hereinafter referred to as audio data or audio signal) is provided to the speech detection unit 140 via wired or wireless transmission.

It should be noted that while the image capture unit 110 and the speech capture unit 120 are disclosed as two separate units or devices, the image capture unit 110 (e.g., a camera) and the speech capture unit 120 (e.g., a microphone) (in any or all disclosed embodiments) may be integrated on a single device or coupled together.

In addition, the image and the audio/speech may be captured, detected, sensed, and/or extracted simultaneous in a single device or captured, detected, sensed, and/or extracted simultaneous from a plurality of devices.

Further, the image and the audio/speech may be transmitted (*i.e*., together as a single signal) to conferencing system 100. If the image and the audio/speech is transmitted together as a single signal (or transmitted as separate signals), the image capture unit 110 and the speech capture unit 120 may be replaced with a single image extracting unit or device 110 (or two image extracting units 110, 120 if transmitted as separate signals) which extracts the image data from the received signal and an audio or speech extracting unit or device 120 which extracts the audio or the speech from the received signal, respectively. Thus, the image extracting unit 110 extracts the image data from the received signal and provides the extracted image to the face detection unit 130 and the audio or speech extracting unit 120 extracts the audio or the speech from the received signal and provides the extracted audio or speech to the speech detection unit 140.

It should be noted that while the image capturing/extracting unit 110 and the speech capturing/extracting unit 120 are disclosed as two separate units or devices, the image capturing/extracting unit 110 and the audio or speech capturing/extracting unit 120 (in any or all disclosed embodiments) may be integrated on a single device or coupled together.

In addition, it should be noted that detailed discussed in step 210 below may, in whole or in part, correspond to the image capture unit 110, and thus, the details of step 210 is incorporated herewith (details discussed in relation to step 210 is incorporated, in whole or in part, into the image capture unit 110).

Further, it should be noted that detailed discussed in step 310 below may, in whole or in part, correspond to the audio or speech capturing/extracting unit 120, and thus, the details of step 310 is incorporated herewith (details discussed in relation to step 310 is incorporated, in whole or in part, into the audio or speech capturing/extracting unit 120).

The face detection unit 130 (or a face detection circuit/circuitry 130) detects the number of people in said image in order to determine the number of speakers captured by the image capture unit 110. For example, the face detection unit 130 detects the faces of the people captured by the image capture unit 110. However, the face detection unit 130, can instead, detect the heads of the people (or human bodies - people) captured by the image capture unit 110. The face detecting unit 130 provides the gain controller 150 with the number of detected faces, heads, people, *etc.*

It should be noted that detailed discussed in step 220 and/or step 230 below may, in whole or in part, correspond to the face detection unit 130, and thus, the details of step 220 and/or step 230 are incorporated herewith (details discussed in relation to step 220 and/or step 230 are incorporated, in whole or in part, into the face detecting unit 130).

In addition, the video (or image) data or the video (or image) signal that is provided to the face detection unit 130 by the image capture unit 110 is transferred by the face detection unit 130 to the video encoder 160.

The speech detection unit 140 (or a speech detection circuit/circuitry 140) detects speech in said captured audio or speech signal or data. The speech detection unit 140 provides the gain controller 150 with detected speech or audio. The speech detection unit 140 may also retain (and pass forward to the gain controller 150) anything considered active speech while disregarding anything not considered active speech. For example, all speech is passed to the gain controller 150 while all noise is eliminated. Lastly, the speech detection unit 140 may be used to detect the number of different voices in the signal.

Further, it should be noted that detailed discussed in step 320 and/or step 330 below may, in whole or in part, correspond to the audio or speech detecting unit 140, and thus, the details of step 320 and/or step 330 are incorporated herewith (details discussed in relation to step 320 and/or step 330 are incorporated, in whole or in part, into the audio or speech detecting unit 140).

The gain controller 150 receives the number of detected faces or heads from the face detecting unit 130 and the detected speech/audio signal or data from the speech detecting unit 140. Based on the received information (e.g., the number of detected faces or heads and the detected speech/audio data/signals), the gain controller 150 adjusts the gain of the received audio (received from the speech capture unit 120 or received from the speech detection unit 140) and outputs a gain adjusted audio signal to the audio encoder 170.

It should be noted that detailed discussed in step 220, step 230, step 240, step 250, step 330, step 340, and/or step 350 below may, in whole or in part, correspond to the gain controller 150, and thus, the details of step 220, step 230, step 240, step 250, step 330, step 340, and/or step 350 are incorporated herewith (details discussed in relation to step 220, step 230, step 240, step 250, step 330, step 340, and/or step 350 are incorporated, in whole or in part, into the gain controller 150).

The video encoder 160 receives the video signal from the face detection unit 130 and encodes the video signal to provide an encoded video signal. The video encoder 160 is a device that enables video compression and/or decompression for digital video. The video encoder 160 performs video encoding on the received video signal to generate and provide a video encoded signal to the network 180.

The audio encoder 170 receives the gain adjusted audio signal from the gain controller 150 and encodes the gain adjusted audio signal to provide an encoded audio signal. The audio encoder 170 is a device that enables data (audio) compression. The audio encoder 170 performs audio encoding on the gain adjusted audio signal to generate and provide a audio encoded signal to the network 180.

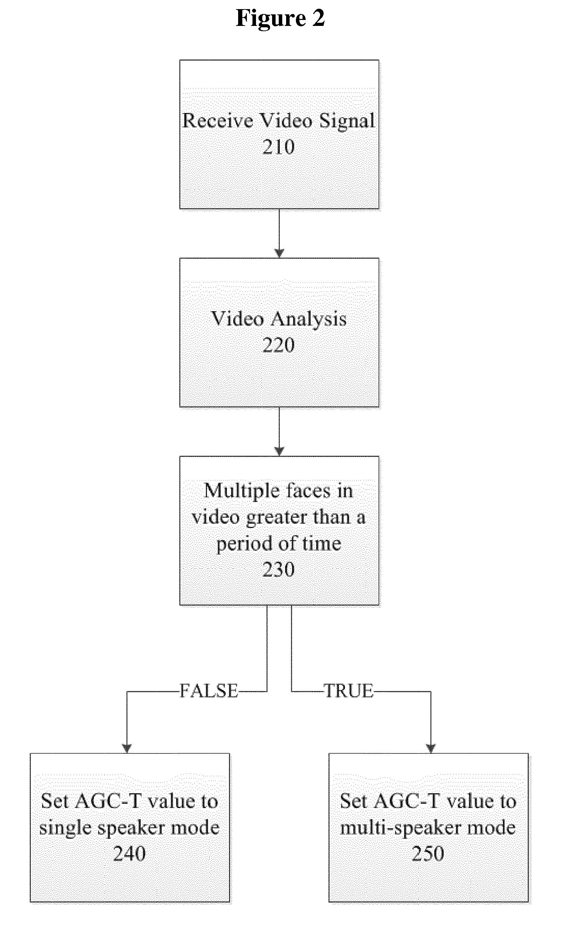

Figure 2 is the flow chart representing an example video analysis method that may be performed by at least one of the conferencing systems discussed above. In Figure 2, the video analysis method may include a step for receiving a video signal (step 210), a video analysis step (step 220), a comparison step (step 230 which may be a reiterative type step), and/or steps for setting an AGC-T value step (steps 240 and/or 250).

In step 210, the conferencing system 100 receives a video signal as discussed in detailed at least in relation to the image capture unit 110 and thus, details discussed in relation to the image capture unit 110 are incorporated herewith.

In step 220, the conferencing system 100 performs a video analysis on the received video signal as discussed in detailed at least in relation to the face detection unit 130 and thus, details discussed in relation to the face detection unit 130 are incorporated herewith (details discussed in relation to the face detection unit 130 are incorporated, in whole or in part, into step 220). More specifically, in step 220, the number of people in said image are detected (e.g., by the face detection unit 130) in order to determine the number of individuals that are speaking captured in step 210 (e.g., by the image capture unit 110).

The face (or head, or body, *etc*.) detection, in step 220, is performed by determining the location and sizes of human faces (or head, or body, *etc*.) in (digital) images. For example, in face detection, facial features are detected while anything not considered facial features (bodies, chairs, desks, trees, *etc*.) are ignored. In addition, in step 220, the detection may be done by conventional methods.

In step 230, the determination is made as to whether there are multiple faces in the video for (greater than) a certain period of time and/or whether there is a single face in the video for (greater than or equal to) the certain period of time (the certain period of time may be 1 second, 2 second, 3 second, *etc.*)*.* Step 230 may be performed so that the AGC threshold (AGC-T) value can be outputted in steps 240 and/or 250, thereby providing a means to inform the level analysis unit, the speech detection unit 140, and/or the gain controller 150 of the determination of whether a single face is detected (e.g., detecting only a single individual that is speaking) or whether a plurality of faces are detected (e.g., detecting a plurality of individuals that are speaking).

It should be noted that the AGC-T values can include two values (e.g., binary/logical values), a first AGC-T value being a "True" value (e.g., a value of 0 or 1) representing a determination (or a detection) that a plurality of individual are speaking (or representing a determination/command to switch to a multi-speaker mode) and a second AGC-T value being a "False" value (e.g., a value of 1 or 0) representing a determination (or a detection) that a single individual is speaking (or representing a determination/command to switch to a single speaker mode). It should also be noted that the AGC-T values may be provided as a single output or as two different outputs from the face detection unit 130 (e.g., step 230) to a single input or to two different inputs of the level analysis unit (or the speech detection unit 140 and/or the gain controller 150).

In other words, in step 230, based on the determination of whether there is a single face or whether there are multiple faces detected in the video for (greater than or equal to) a certain period of time, the determination may be made as to whether to switch to a single speaker mode or a multi-speaker mode (which may also be referred to as a multiple speaker mode) based on the AGC-T value outputted and provided to the level analysis unit, the speech detection unit 140, and/or the gain controller 150 (e.g., inputted into the level analysis step 330).

The conferencing system 100 may automatically start in the single speaker mode or the multi-speaker mode. Alternatively, the conferencing system 100 may start in an initialization mode (*i.e.,* if not automatically set to start in a particular mode). For example, in step 230, but during initialization (not currently in either a single speaker mode or a multiple speaker mode), the determination is made as to whether (or not) there is a single face or whether (or not) there are multiple faces detected in the video for (greater than or equal to) a certain period of time (e.g., an initialization period being, for example, 1 second, 2 seconds, 3 seconds, *etc*.)*.* If during the initialization period, it is determined that there are multiple faces detected in the video (or if it is determined that a single face is not detected), the gain controller sets the system to a multiple speaker mode (e.g., based on receiving the AGC-T value that corresponds to a multiple speaker mode value). However, if during the initialization period, it is determined that there is only a single face detected in the video (or if it is determined that a plurality of faces is not detected or if it is determined that less than a plurality of faces is detected), the gain controller sets the system to a single speaker mode (e.g., based on receiving the AGC-T value that corresponds to a single speaker mode value).

In step 230, but after the initialization period (currently in either a single speaker mode or a multi-speaker mode), the determination is made as to whether (or not) there is a single face or whether (or not) there are multiple faces (or less than a plurality of faces) detected in the video for (greater than or equal to) a certain period of time (e.g., 1 second, 2 seconds, 3 seconds, *etc*.) so that the current mode can be switched (single speaker mode to multi-speaker mode, and vice versa).

When it is determined that there is only a single face detected in the video (or if it is determined that a plurality of faces are not detected or if it is determined that less than a plurality of faces are detected), the gain controller switches the system to a single speaker mode (e.g., based on receiving the AGC-T value that corresponds to a single speaker mode value).

When it is determined that there are multiple faces detected in the video (or if it is determined that a single face is not detected), the gain controller switches the system to a multiple speaker mode (e.g., based on receiving the AGC-T value that corresponds to a multiple speaker mode value).

Further, the gain controller may be able to adjust (change) the gain of the speech signal during either mode. The rate that the gain controller may adjust the gain of the speech in either mode may be performed at the same rate. However, in an alternative embodiment, the gain chances provided to the detected speech signal in the single speaker mode may be provided at a slower rate as compared to the gain chances provided to the detected speech signal in the multi-speaker mode because the actual input signal volume is not likely to change quickly when a single face is detected in comparison to when a plurality of faces are detected. For example, the rate that the gain controller changes the gain of the speech signal in the single speaker mode may be every 0.5 seconds while the gain controller changes the gain of the speech signal in the multi-speaker mode every 0.1 seconds. Therefore, by allowing the gain controller to react much faster in the multi-speaker mode, the gain control can more quickly bring the volume of the plurality of individuals who are speaking to (approximately) the same level. By providing rapid gain changes to the plurality of speakers and having a result of the plurality of individuals being heard at (approximately) the same level, the overall system may at least benefit by allowing one individual to be close to the microphone while another speaker is a great distance away from that microphone.

In an alternative embodiment, when it is determined to set the AGC-T value to a single speaker mode, the automatic gain control (via gain controller 150) may "lock" onto the only individual that is speaking (providing an increased gain control to only the selected/detected individual that is speaking) and provide an amount of (increased) gain to signal of the individual that is speaking (only change/increase the gain of the individual that is speaking or increase the gain of the individual that is speaking while reducing the gain of everything besides the detected/locked individual that is speaking, any other detected individuals that are speaking, and/or detected noise).

Similarly (in the alternative embodiment discussed in the above paragraph), when it is determined to set the AGC-T value to a multi-speaker mode, the automatic gain control (via gain controller 150) may "lock" onto the detected plurality of individuals that are speaking (maintain an increased gain control to the detected plurality of individuals that are speaking) and provide an amount(s) of gain for any and all signals that are considered to be voice (or audio)It should be noted that all of the disclosed periods of time (in all of the provided examples, e.g., "a certain period of time") may be set by any practical means, e.g., set by the user, at any time, it may be predetermined or preset by the device, or may be determined based on an adaptive algorithm using previous times of determinations.

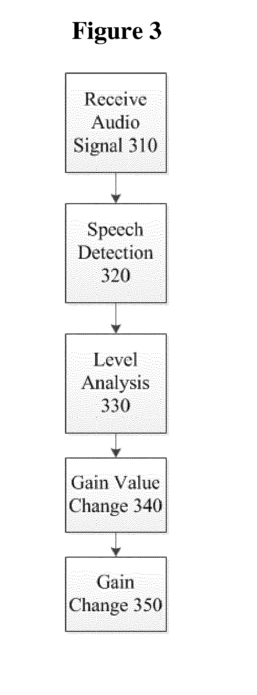

In step 230, the determination of whether (or not) there are multiple faces (or a single face, *etc*.) in the video over a certain period of time may be performed by the face detection unit 130 and/or the gain controller 150, and thus, details discussed in relation to the face detection unit 130 and/or the gain controller are incorporated herewith (details discussed in relation to the face detection unit 130 and/or the gain controller are incorporated, in whole or in part, into step 230). Figure 3 is the flow chart representing an example an audio analysis method that may be performed by at least one of the conferencing systems discussed above.

In step 310, the conferencing system 100 receives an audio signal as discussed in detailed at least in relation to the speech capture unit 120 and thus, details discussed in relation to the speech capture unit 120 are incorporated herewith.

In step 320, the conferencing system 100 performs a speech analysis on the received video signal as discussed in detailed at least in relation to the speech detection unit 140 and thus, details discussed in relation to the speech detection unit 140 are incorporated herewith (details discussed in relation to the speech detection unit 140 are incorporated, in whole or in part, into step 320). More specifically, in step 320, any and all speech/audio is detected (e.g., by the speech detection unit 140) in order to determine all the speech or audio captured in step 310 (e.g., by the speech capture unit 120). In simple terms, the speech detection unit 140 (in step 320) may merely detect active speech. In addition, in step 320, the detection may be done by conventional methods.

In an alternative embodiment, in step 320, the speech detection unit 140 may also use the detected speech/audio to assist (or replace the entire video analysis as illustrated in Figure 2) in determining the number of individuals that are speaking. For example, by using a plurality of speech capture units (a plurality of microphones or a plurality of spatially separated microphones), the differences in the time delays of received speech signals of different individuals that are speaking may be used to determine the number of individuals that are speaking from the multi-speaker signals. More specifically, if in step 320, the speech detection unit 140 can accurately determine the number of individuals that are speaking (one individual, two individuals, *etc*.), the entire video analysis as illustrated in Figure 2 is no longer necessary considering the speech detection unit 140 (in step 320) can provide the AGC-T value (indicating a single individual speaking or a plurality of individuals speaking).

It should be noted that the processes may move from step 320 to step 330 (only) based on a detection of active speech. Otherwise, the system maintains step 320 until active speech is detected.

In step 330, the conferencing system 100 performs a level analysis on the received audio/speech signal as discussed in detailed at least in relation to the speech detection unit 140 and/or the gain controller 150 and thus, details discussed in relation to the speech detection unit 140 and/or the gain controller 150 are incorporated herewith (details discussed in relation to the speech detection unit 140 and/or the gain controller 150 are incorporated, in whole or in part, into step 330). In addition, the level analysis in step 330 may be performed by a level analysis unit that works separately or in conjunction with the speech detection unit 140 and/or the gain controller 150.

For example, in step 330 (which may also be referred to as step 330a), the levels (or volumes) of each audio/speech signal is determined. More specifically, in step 330 (or step 330a), the detect (active) speech is compared to an upper threshold (to indicate whether the volume of the detected speech is above a certain level- volume is too high) and is compared to a lower threshold (to indicate whether the volume of the detected speech is below a certain level- volume is too low).

Further, in step 330 (which may also be referred to as step 330b, step 330b occurring after step 330a), when the volume is detected to be above or below a certain threshold, the speech detection unit 140 and/or the gain controller 150 determines whether the volume is detected to be above a certain threshold for a certain period of time or whether the volume is detected to be below a certain threshold (e.g., the certain period of time may be, for example, 1 second, 2 seconds, 3 seconds, *etc*.).

Lastly, the analysis performed in step 330 (steps 330a and 330b) by (for example) the gain controller 150 also takes into consideration the AGC-T value provided before the gain controller 150 determines the gain change value (in step 340) and/or provides the gain change (in step 350).

It should be noted that the processes may move from step 330 to step 340 (only) based on a determination that the volume of detected (active) speech is higher and/or lower than a certain threshold(s) for a certain period of time. Otherwise, the system maintains step 330 until the detected (active) speech is outside a certain range for a certain period of time (above or below certain thresholds for a certain period of time).

In step 340, the conferencing system 100 makes a determination as to the gain adjustment value on each of the detected audio/speech signals as discussed in detailed at least in relation to the speech detection unit 140 and/or the gain controller 150 and thus, details discussed in relation to the speech detection unit 140 and/or the gain controller 150 are incorporated herewith (details discussed in relation to the speech detection unit 140 and/or the gain controller 150 are incorporated, in whole or in part, into step 330). More specifically, in step 340, it is determine whether to more quickly/rapidly change the gain based on being in the multi-speaker mode versus whether to less rapidly change the gain based on being in the single speaker mode. Thus, in step 340, the rate of gain changes in the single speaker mode and the multi-speaker mode are determined.

As an alternative, when in the single speaker mode, step 340 can also determine and provide the gain adjustment value to the gain controller so that the gain controller may adjust the gain of the single individual's (speaker's) speech signal. In this alternative method and when in the multi-speaker mode, step 340 can also determine and provide the gain adjustment value(s) to the gain controller so that the gain controller may adjust the gain(s) of the each of the individual's (speaker's) speech signals.

In step 350, the conferencing system 100 makes the gain adjustment(s) to the speech signal(s) in the received audio/speech captured by the speech capture unit 120 or the speech/audio detected by the speech detection unit 140.

In step 350, the performing of the gain adjustment(s) as discussed in detailed at least in relation to the gain controller 150 are incorporated herewith (details discussed in relation to the gain controller 150 are incorporated, in whole or in part, into step 350).

Figure 5 is a circuit diagram of one aspect of the gain controller 150 (also referred to as computing device 1000) according to an embodiment of the invention.

In a very basic configuration of computing device 1000 (e.g., gain controller 150), the computing device 1000 typically includes one or more processors 1010 and a system memory 1020. A memory bus 1030 can be used for communications between the processor 1010 and the system memory 1020.

Depending on the desired configuration, the one or more processor 1010 of computing device 1000 can be of any type including but not limited to a microprocessor, a microcontroller, a digital signal processor, or any combination thereof. Processor 1010 can include one more levels of caching, such as a level one cache 1011 and a level two cache 1012, a processor core 1013, and registers 1014. The processor core 1013 can include an arithmetic logic unit (ALU), a floating point unit (FPU), a digital signal processing core (DSP Core), or any combination thereof. A memory controller 1015 can also be used with the processor 1010, or in some implementations the memory controller 1015 can be an internal part of the processor 1010.

Depending on the desired configuration, the system memory 1020 can be of any type including but not limited to volatile memory (such as RAM), non-volatile memory (such as ROM, flash memory, etc.) or any combination thereof. System memory 1020 typically includes an operating system 1021, one or more applications 1022, and program data 1024. Application 1022 includes an authentication algorithm 1023. Program Data 1024 includes service data 1025.

Computing device 1000 can have additional features or functionality, and additional interfaces to facilitate communications between the basic configuration 1001 and any required devices and interfaces. For example, a bus/interface controller 1040 can be used to facilitate communications between the basic configuration 1001 and one or more data storage devices 1050 via a storage interface bus 1041. The data storage devices 1050 can be removable storage devices 1051, non-removable storage devices 1052, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media can include volatile and nonvolatile, removable and non-removable media implemented in any method or technology for storage of information, such as computer readable instructions, data structures, program modules, or other data

System memory 1020, removable storage 1051 and non-removable storage 1052 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the computing device 1000. Any such computer storage media can be part of the computing device 1000.

Computing device 1000 can also include an interface bus 1042 for facilitating communication from various interface devices (e.g., output interfaces, peripheral interfaces, communication interfaces, etc.) to the basic configuration 1001 via the bus/interface controller 840. Example output devices 1060 include a graphics processing unit 1061 and an audio processing unit 1062, which can be configured to communicate to various external devices such as a display or speakers via one or more A/V ports 1063. Example peripheral interfaces 1070 include a serial interface controller 1071 or a parallel interface controller 1072, which can be configured to communicate with external devices such as input devices (e.g., keyboard, mouse, pen, voice input device, touch input device, etc.) or other peripheral devices (e.g., printer, scanner, etc.) via one or more I/O ports 1073. An example communication device 1080 includes a network controller 1081, which can be arranged to facilitate communications with one or more other computing devices 1090 over a network communication via one or more communication ports 1082. The communication connection is one example of a communication media. Communication media may typically be embodied by computer readable instructions, data structures, program modules, or other data in a modulated data signal, such as a carrier wave or other transport mechanism, and includes any information delivery media. A "modulated data signal" can be a signal that has one or more of its characteristics set or changed in such a manner as to encode information in the signal. By way of example, and not limitation, communication media can include wired media such as a wired network or direct-wired connection, and wireless media such as acoustic, radio frequency (RF), infrared (IR) and other wireless media. The term computer readable media as used herein can include both storage media and communication media.

Computing device 1000 can be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Computing device 1000 can also be implemented as a personal computer including both laptop computer and non-laptop computer configurations.

There is little distinction left between hardware and software implementations of aspects of systems; the use of hardware or software is generally (but not always, in that in certain contexts the choice between hardware and software can become significant) a design choice representing cost versus efficiency tradeoffs. There are various vehicles by which processes and/or systems and/or other technologies described herein can be effected (e.g., hardware, software, and/or firmware), and the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation. In one or more other scenarios, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof.

In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Exemplary embodiments are shown and described in the present disclosure. It is to be understood that the embodiments are capable of use in various other combinations and environments and are capable of changes or modifications within the scope of the inventive concept as expressed herein. Some such variations may include using programs stored on non-transitory computer-readable media to enable computers and / or computer systems to carry our part or all of the method variations discussed above. Such variations are not to be regarded as departure from the spirit and scope of the invention, and all such modifications as would be obvious to one skilled in the art are intended to be included within the scope of the following claims:

## Claims

1. A control system (100) for varying an audio level in a communication system, the control system comprising:
at least one receiving unit (110, 120) for receiving an audio signal and a video signal;
a determining unit (130, 140) for determining a number of individuals that are speaking by performing recognition on either the audio signal or the video signal; and
a gain adjustment unit (150) for adjusting a gain of the audio signal based on said number of determined individuals that are speaking.

2. The control system according to claim 1, wherein
said recognition is performed by performing either face recognition or speech analysis in order to determine the number of individuals that are speaking, or
said recognition is performed by performing speech analysis on the audio signal in order to determine the number of individuals that are speaking, or
said recognition is performed by performing face recognition on the video signal.

3. The control system according to claim 1, further comprising:
a switching unit (150) for switching between a single speaker mode and a multi-speaker mode based on said detection of the number of individuals speaking.

4. The control system according to claim 2, wherein
the face recognition is performed to detect either a face or a plurality of faces.

5. The control system according to claim 4, further comprising:
a switching unit (150) for switching between a single speaker mode and a multi-speaker mode based on the number of detected faces.

6. The control system according to claim 4, wherein
the switching unit switching from the single speaker mode to the multi-speaker mode in response to said detection of a plurality of faces and gain adjustment unit adjusting the gain of the audio signal at a first rate in the multi-speaker mode,
the switching unit switching from the multi-speaker mode to the single speaker mode in response to said detection of only a single face and gain adjustment unit adjusting the gain of the audio signal at a second rate in the single speaker mode, and
wherein the first rate is a different rate than the second rate.

7. The control system according to claim 6,
wherein the first rate is a rate greater than the second rate.

8. The control system according to claim 1,
wherein the detection unit determines whether the volume of the detected speech is outside a given range of volume by comparing the volume of the detected speech to at least one threshold,
wherein the detection unit determines whether the volume of the detected speech is outside the given range of volume for a certain length of time based on the occurrence that the volume of the detected speech is outside the given range of volume,
wherein the detection unit determines the first rate based on the volume of the detected speech, and
wherein the detection unit determines the second rate based on the volume of the detected speech.

9. The control system according to claim 1, wherein
the at least one receiving unit receives a stream of data having both the audio signal and the video signal.

10. The control system according to claim 1, wherein
the at least one receiving unit includes a first receiving unit for receiving the audio signal; and
the at least one receiving unit includes a second receiving unit for receiving the video signal.

11. The control system according to claim 10, wherein
the first receiving unit is a microphone; and
the second receiving unit is a camera.

12. A control method for varying an audio level in a communication system, the control method comprising:
receiving an audio signal (310);
receiving a video signal (210);
performing recognition on either the video signal or the audio signal to determine a number of individuals that are speaking (220, 230, 320, 330); and
adjusting a gain of the audio signal based on said number of determined individuals that are speaking (240, 250, 340, 350).

13. The control method according to claim 12, wherein
said recognition is performed by performing either face recognition or speech analysis in order to determine the number of individuals that are speaking.

14. The control method according to claim 12, wherein
said recognition is performed by performing speech analysis on the audio signal in order to determine the number of individuals that are speaking.

15. The control method according to claim 12, wherein
said recognition is performed by performing face recognition on the video signal.
